# EUROPEAN PATENT SPECIFICATION

(11) **EP 3 506 442 B1**
(45) Date of publication and mention of the grant of the patent: **16.12.2020**
(21) Application number: 18210062.8
(22) Date of filing: 04.12.2018
(51) Int. Cl.: H02G 3/04, H02G 3/06

(54) **CABLE TRAY ASSEMBLY**
KABELTRÄGERANORDNUNG
ENSEMBLE SUPPORT DE CÂBLE

(30) Priority: 15.12.2017 ES 201731527 U
(43) Date of publication of application: 03.07.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- EP-A2- 0 767 521
- DE-U- 7 008 943
- ES-U- 1 168 783
- FR-A5- 2 067 691
- US-A- 4 907 767

## Description

### Field of the Invention

The invention is comprised in the field of cable trays that are used for guiding electric cables, optical fiber cables, or cables of another type.

More specifically, the invention relates to a cable tray assembly of the type comprising:
- a cable tray with a bottom wall and two side walls facing one another extending respectively from the two longitudinal sides of said bottom wall and demarcating with respect to one another an open upper face of said cable tray;
- a lid which is arranged on said cable tray, covering said open upper face of the cable tray in at least one segment of said cable tray;
- spacers which are fixed to each of said side walls spaced apart from one another along each side wall, said spacers being arranged between said lid and said side walls and thereby separating said lid from said open upper face of the cable tray.

### State of the Art

In cable tray assemblies of this type, the purpose of the lid is to protect the cables against weather inclemencies and solar radiation, as well as to prevent a person or animal from accidentally coming into contact with the cables, and to limit dust buildup on the cables. In the known assemblies, like the one disclosed in document ES1168783U, the lid is coupled to the side walls of the tray, completely closing the upper face thereof. The complete closure of the upper face of the cable tray presents the problem that it prevents air circulation through the upper face of the cable tray. This prevents the cables, which can dissipate heat in significant quantities, from being cooled by natural convection, which in certain cases requires limiting the intensity of the current going though the cables or increasing the section thereof to prevent them from reaching too high of a temperature. To prevent this from happening, holes can be made in the lid, but to achieve sufficient natural convection, the area of the holes must be significant, which negatively affects protection of the cables. Spacers which are placed between the cable tray and the lid to separate the lid from the upper face of the cable tray, thereby creating a side opening between said lid and the side walls of the cable tray above said upper face, are known. This side opening allows establishing natural convection driven by the heat dissipated by the cables and does not significantly affect protection of the cables because even though the lid is arranged at a vertical distance from the upper face of the tray, it covers said upper face. Another function of these spacers is that the raising of the lid by means of the spacers increases the space in terms of available height for placing the cables, such that it is possible to arrange a larger number of cables and/or cables of a larger section in one and the same cable tray. These known spacers are fixed with screws or with other complementary fastening means in locations of the side walls of the cable tray which are specifically formed for that purpose and distributed along said cable tray. The placement of these spacers and of the lid in a cable tray that is already installed in an establishment is not comfortable for the user. This constitutes a considerable problem when cable trays are installed at a height or in hard-to-access places, as is often the case in industrial or technical establishments.

FR2067691A5 discloses a cable tray assembly according to the preamble of claim 1.

EP0767521A2 discloses a multifunctional conduit which can act as a structural member, comprising a base, two side walls engaging with the base and a lid engaging to the side walls.

### Description of the Invention

The purpose of the invention is to provide a cable tray assembly of the type indicated above, which facilitates the placement of the spacers and of the lid by a user.

This purpose is achieved by means of a cable tray assembly according to claim 1.

As a result of this configuration according to the invention, the user does not have to deal with supplementary means for fixing the spacers and can place said spacers in any position along the cable tray by means of a simple press fitting thereof, whereby the assembly of the spacers and of the lid on said spacers is particularly easy. Furthermore, the fact that the spacers can be placed without distinction in any position along the cable tray considerably facilitates the operations of laying the cables in the cable tray, since the user can move a spacer along the cable tray at will so as to more readily let the cables out through the side opening created under the lid.

In some embodiments, the upper portion of the side walls of the cable tray has a section shape comprising a planar upper face and an outer wall forming a bend, and the lower end of the spacers has a section shape comprising a hook-shaped lower wing, a planar upper wing facing said lower wing, and a joining segment joining said lower wing and said planar upper wing. The lower end of the spacers is elastically deformable, such that it can undergo an elastic deformation which increases the separation between said planar upper wing and said hook-shaped lower wing, thereby allowing a press fitting of the lower end of the spacers with the upper portion of the side walls. In this press fitting, the hook-shaped lower wing fits with the bend and the planar upper wing rests against the planar upper face of the upper portion of the side wall and applies pressure on said side wall due to the effect of the elastic deformation of the lower end. This configuration provides a particularly robust fixing of the spacers to the side walls which is able to withstand a torque on the spacer caused by a force applied on the lid. Furthermore, the press fitting of the spacers is easy for the user to perform.

In some embodiments, the planar upper face of the side walls comprises a groove extending along the side wall, and the planar upper wing of the lower end of the spacers comprises at the end thereof a tooth fitting in said groove. This configuration allows robustly fixing the spacer to the side walls when said side walls have a significant width, without needing to increase the length of the planar upper wing of the lower end of the spacers.

In other embodiments, the planar upper wing of the lower end of the spacers comprises at the end thereof a tooth fitting on an end edge of the planar upper face of the side walls. The fixing of the spacer to the side wall is therefore better. Furthermore, these same spacers provided with a tooth at the end of the planar upper wing can likewise be fixed to wider side walls provided with a longitudinal groove like in the embodiments mentioned in the preceding paragraph.

The upper end of the spacers reproduces the section shape of the upper portion of the side walls, such that the lid can be coupled both to said upper end of the spacers and to said upper portion of the side walls, and such that two spacers can be coupled one on top of the other by press fitting the lower end of one spacer onto the upper end of the other spacer. This configuration allows the user to assemble a lid on the spacers or directly on the side walls of the cable tray using the same components. It is therefore possible to readily install a cable tray in which segments thereof have a lid separated by means of the spacers, thereby allowing good ventilation of the cables in said segment, whereas other segments have a lid which completely closes the upper face of the cable tray to provide better protection of the cables in these latter segments. On the other hand, this configuration also allows the user to place one spacer on top of another to readily increase the height of separation between the lid and the side walls, without needing to have different spacers with different heights. This allows for readily adapting the cable tray to lay cables of a larger diameter and/or a larger number of cables therein.

Preferably, the cable tray assembly comprises at least one anchoring part which is coupled to the spacers to secure the coupling of the lid to said spacers. The anchoring part is made up of a single part, preferably made of a polymer material, and has a complementary shape with respect to the upper end of the spacers, such that said anchoring part is press fit onto said upper end of the spacers and applies pressure on the lid. This pressure applied by the anchoring part on the lid provides a particularly firm securing of the coupling of the lid to the spacers.

Preferably, the anchoring part, the upper end of the spacers, and the upper portion of the side walls are formed such that said anchoring part press fits both onto said upper end of the spacers, applying pressure on the lid coupled to said upper end of the spacers, and onto said upper portion of the side walls, applying pressure on the lid coupled to said upper portion of the side walls. This allows using the same components to secure the lid by means of the anchoring part both when the lid is coupled directly to the side walls and when it is coupled to the spacers.

In some embodiments, at least one of the spacers is longer than another one of the spacers in the longitudinal direction of the side walls. This allows using the longest spacers to laterally close the cable tray and thereby protect the cables in some segments in which greater protection of the cables is required, maintaining the distance between the lid and the side walls.

Although the invention can be applied to cable trays in which the channel is a continuous channel made up of a single part, in the preferred embodiments the cable tray is a cable ladder, formed by two coplanar side rails attached to one another by a plurality of cross members spaced apart from one another, said two side rails constituting the side walls of the cable tray demarcating with respect to one another the open upper face of said tray, and said plurality of cross members constituting a discontinuous bearing surface for cables which constitutes the bottom wall of the cable tray; wherein each of said cross members is a profile made of a polymer material and each of said side rails is a profile made of a polymer material; and wherein the inner side of each of said side rails, facing the opposite side rails, and the two ends of each of said cross members are formed such that said ends of the cross member are press fit onto said inner sides of the side rails; and the lid is made up of a single part made of a polymer material. A cable ladder of this type is described in patent document WO2016046436A1.

The invention also comprises other detail features shown in the following detailed description of the embodiments of the invention and in the attached drawings.

### Brief Description of the Drawings

The advantages and features of the invention will be seen based on the following description in which preferred embodiments of the invention are described in a manner that is not limiting with respect to the main claim, in reference to the attached drawings.
Figure 1 is an exploded perspective view of a first embodiment of a cable tray assembly.
Figure 2 is a perspective view of the cable tray assembly according to Figure 1, with all its elements assembled.
Figures 3 and 4 are a perspective view and a profile view, respectively, of the spacer according to Figure 1.
Figure 5 is an exploded partial profile view of the cable tray assembly according to Figure 1.
Figure 6 is a partial profile view of the cable tray assembly according to Figure 2, with all its elements assembled.
Figure 7 is an exploded perspective view of a second embodiment of a cable tray assembly according to claim 1.
Figure 8 is a perspective view of the cable tray assembly according to Figure 7, with all its elements assembled.
Figures 9 and 10 are a perspective view and a profile view, respectively, of the spacer according to Figure 7.
Figure 11 is an exploded partial profile view of the cable tray assembly according to Figure 7.
Figure 12 is a partial profile view of the cable tray assembly according to Figure 8, with all its elements assembled.
Figure 13 is a profile view of the cable tray assembly of Figure 7, without spacers and with the lid placed directly on the side walls of the cable tray.
Figure 14 is a section view of a cable tray in which a spacer if fitted one on top of another.
Figure 15 is a perspective view of a cable tray in which spacers with different lengths have been arranged in the longitudinal direction of the side walls.

### Detailed Description of Embodiments of the Invention

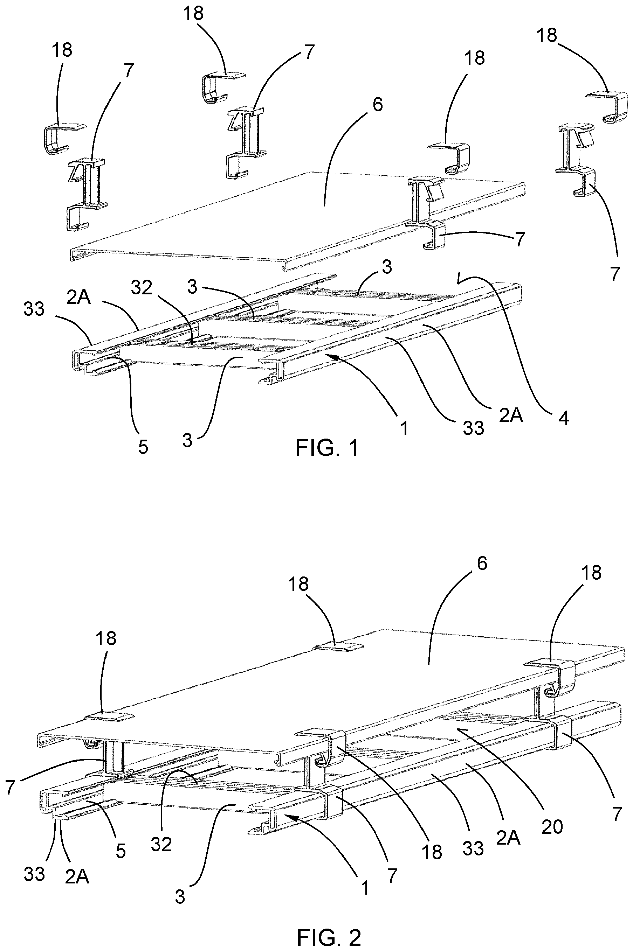

Figures 1 to 6 show a first embodiment of a cable tray assembly, comprising a cable tray 1, a lid 6 for protecting the cables arranged in the cable tray 1, and spacers 7 which are arranged between the lid 6 and the cable tray 1.

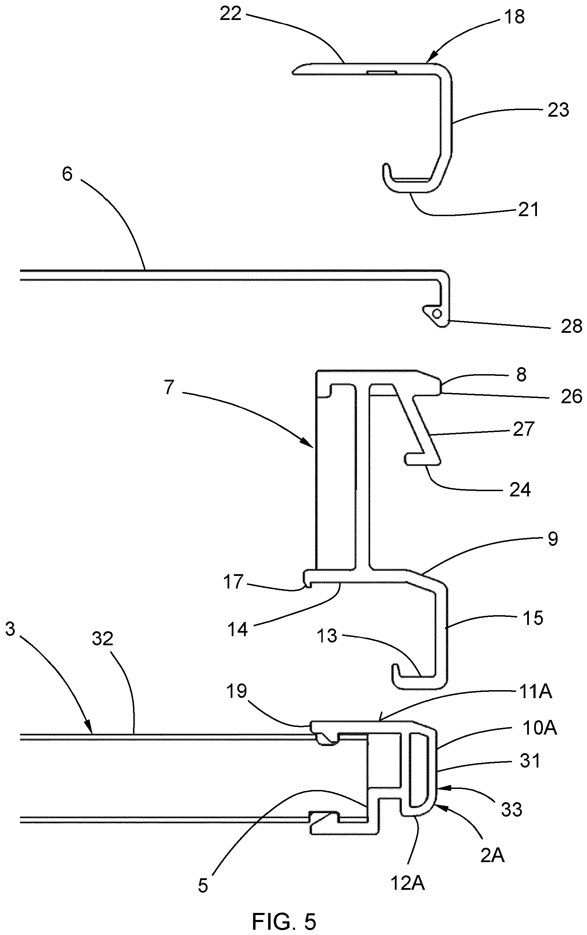

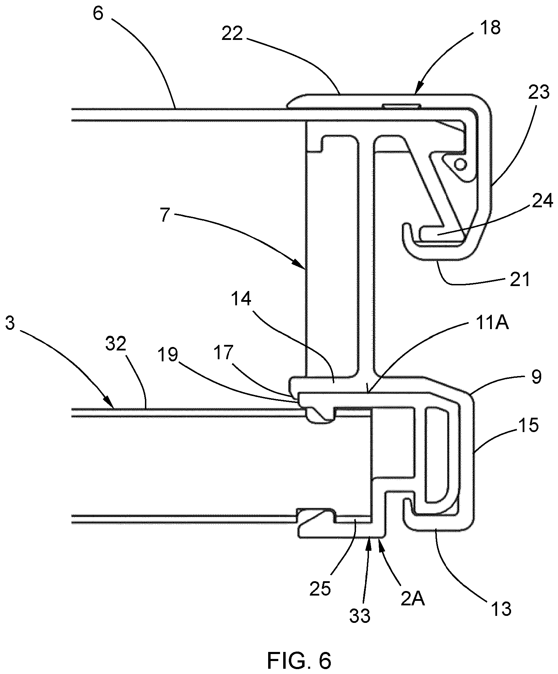

The cable tray 1 has a bottom wall (32) and two side walls (33) facing one another extending respectively from the two longitudinal sides of said bottom wall (32) and demarcating with respect to one another an open upper face (4) of said cable tray (1). More specifically, in the depicted embodiment, the cable tray (1) is a cable ladder, formed by two coplanar side rails 2A attached to one another by a plurality of cross members 3 spaced apart from one another. As can be seen in Figure 1, the two side rails 2A demarcate between one another the open upper face 4 of the cable tray 1, and the plurality of cross members 3 constitutes a discontinuous bearing surface for cables, which is the bottom wall 32 of the cable tray 1. The ends of the cross members 3 are press fit onto facing inner sides 5 of the side rails 2A. In the depicted example, as can be seen in the profile views of Figures 5 and 6, the inner sides 5 of the side rails 2A form a channel 25 and the ends of the cross members are sized such that they enter said channel 25 and are press fit onto same. The side walls 33 formed by the side rails 2A have an upper portion 10A having a constant section along each side wall 33. This constant section has a shape comprising a planar upper face 11A and a straight outer wall 31 forming a rounded bend 12A at its lower end.

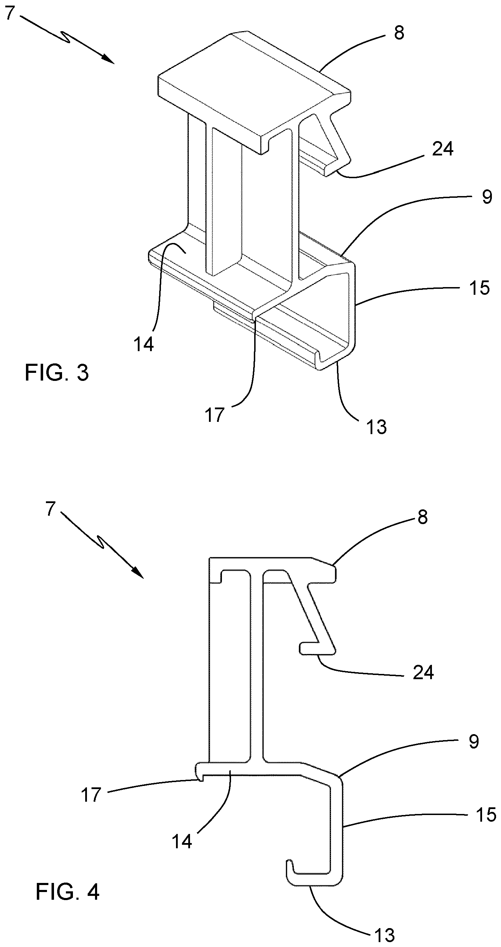

As can be seen in Figures 3 and 4, the spacers 7 are made up of a single part and comprise a lower end 9, intended for fitting with the upper portion 10A of the side wall 33, and an upper end 8 intended for receiving the lid 6. The lower end 9 has a complementary shape with respect to the upper portion 10A of the side walls 33. Specifically, the lower end 9 has a section shape comprising a hook-shaped lower wing 13, a planar upper wing 14 having at the end thereof a tooth 17 and which is facing the lower wing 13, and a joining segment 15 joining the lower wing 13 and the planar upper wing 14. The lower end 9 is elastically deformable, such that it can undergo an elastic deformation which increases the separation between the planar upper wing 14 and the hook-shaped lower wing 13. As can be seen in Figures 5 and 6, in this embodiment the upper end 8 of the spacers 7 has a section shape which is different from the section shape of the upper portion 10A of the side walls 33.

To assemble the cable tray assembly in the position shown in Figures 2 and 6, several spacers 7 spaced apart from one another are fixed to each of the side walls 33. To that end, the lower end 9 of the spacers 7 is press fit onto the upper portion 10A of the side walls 33, such that the hook-shaped lower wing 13 fits with the bend 12A, and the planar upper wing 14 rests against the planar upper face 11A of the upper portion 10A applying pressure on the latter due to the effect of the elastic deformation of the lower end 9. Furthermore, the tooth 17 at the end of the planar upper wing 14 fits onto an end edge 19 of the planar upper face 11A of the side wall 33. The upper portion 10A of each side wall 33 has a constant section along said side wall 33, whereby the lower end 9 of the spacer 7 is press fit onto said upper portion 10A of the side wall in any position along said side wall 33. The user can thus place each spacer 7 in any position along the side wall 33. After having fixed the spacers 7 to the side walls 33, the lid 6 is placed on the upper end 8 of the spacers 7. The spacers 7 are therefore arranged between the lid 6 and the side walls 33, thereby separating the lid 6 from the open upper face 4 of the cable tray 1. The lid 6 thereby covers the open upper face 4 of the cable tray 1, at a distance from same, in a segment of said cable tray 1 of a length equal to the length of said lid 6. In this segment, between every two consecutive spacers 7, side openings 20 are formed between the lid 6 and the side wall 33, which allow air to circulate to cool the cables (not depicted) laying on the cross members 3.

To secure the coupling of the lid 6 to the spacers 7, anchoring parts 18 having a complementary shape with respect to the shape of the upper end 8 of the spacers 7 can optionally be used, such that each anchoring part 18 is press fit onto the upper end 8 of each spacer 7, with the lid 6 arranged therebetween, and applies pressure on said lid 6. The press fitting of the anchoring parts 18 onto the upper end 8 of the spacers 7, with the lid 6 arranged therebetween, is performed in the same manner as the press fitting of the lower end 9 of the spacers 7 onto the upper portion of the side walls 33. To that end, the anchoring parts 18 have a section shape similar to the shape of the lower end 9 of the spacers 7, with a hook-shaped lower wing 21, a planar upper wing 22 facing the lower wing 21, and a joining segment 23 joining the lower wing 21 and the planar upper wing 22. The anchoring part 18 is elastically deformable, such that it can undergo an elastic deformation which increases the separation between the planar upper wing 22 and the hook-shaped lower wing 21. The outer wall of the upper end 8 of the spacers 7 comprises an upper shoulder 26 and a cantilever wing 27 extending obliquely downwards and outwards and ending in a short segment extending inwards, forming a bend 24. As can be seen in Figure 6, a hook-shaped lateral end 28 of the lid 6 fits in the upper shoulder 26, and the hook-shaped lower wing 21 of the anchoring part 18 fits in the bend 24 formed at the end of the cantilever wing 27.

The side rails 2A and the cross members 3 are profiles made of a polymer material. The lid 6, spacers 7, and anchoring parts 18 are all made up of a single part made of a polymer material. The polymer material of these components which form the cable tray assembly can be the same for all of them or different. Preferably, the polymer material is a thermoplastic, such as PVC, polycarbonate, or polypropylene. It can also be a thermosetting resin, such as glass fiber-reinforced polyester. Preferably, the polymer material is an electrical insulating material with a surface resistivity greater than 100 MΩ (surface resistivity measured according to standard EN 62631-3-2:2016).

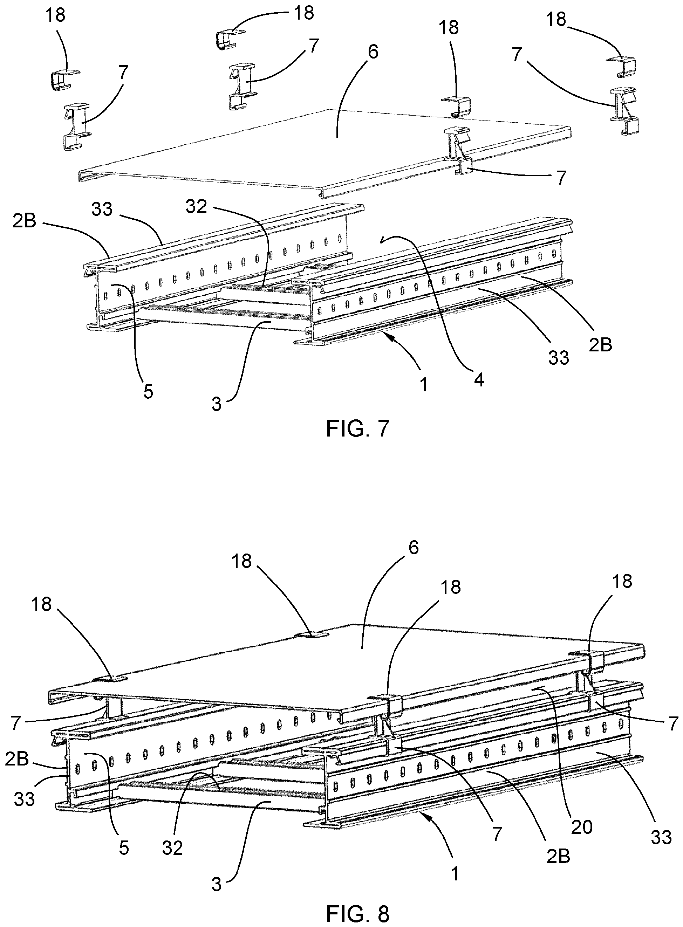

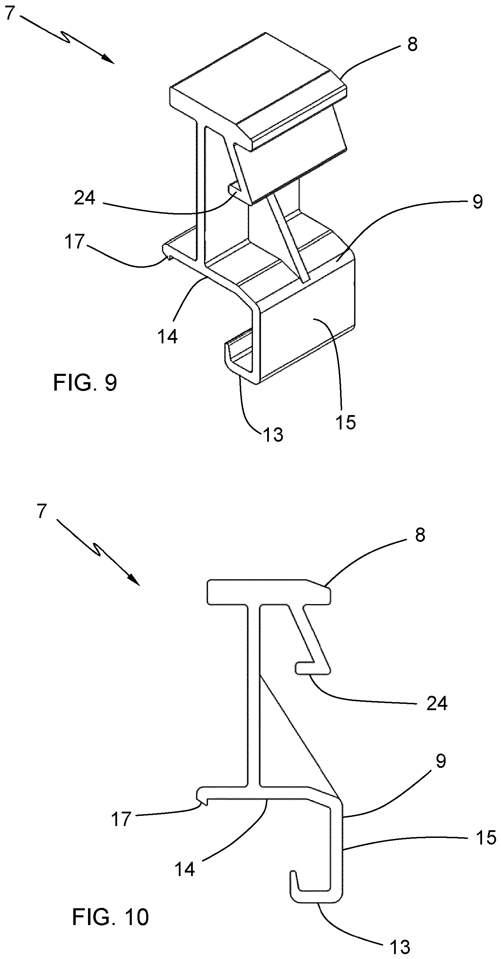

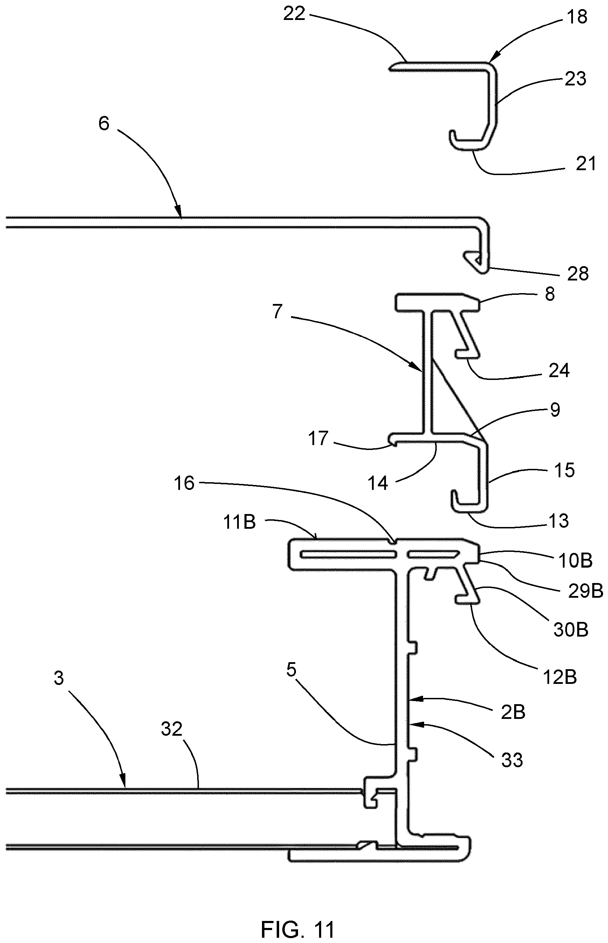

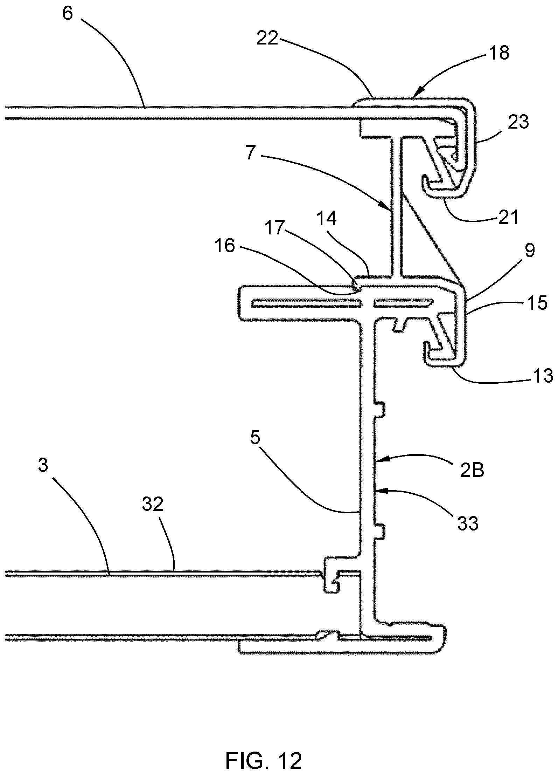

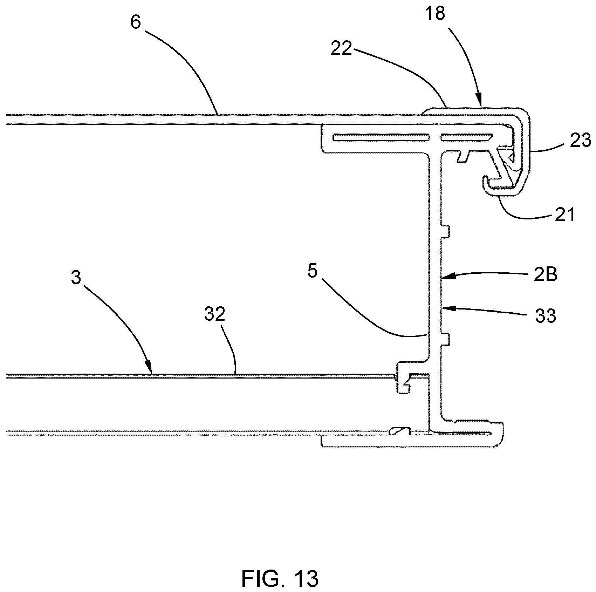

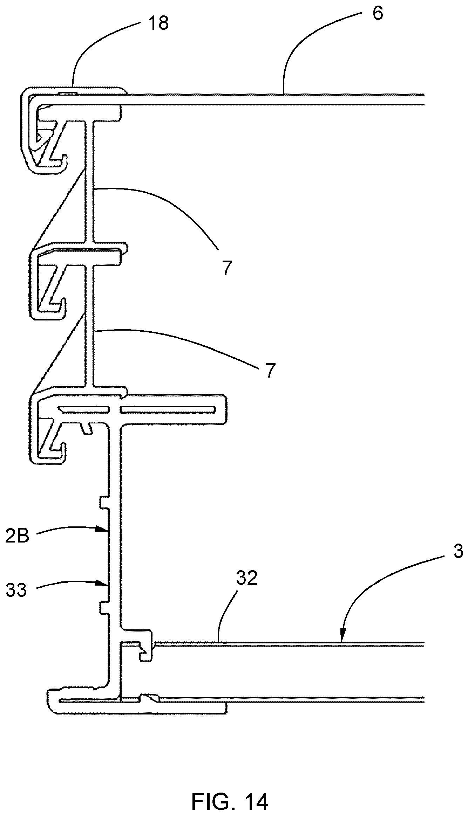

Figures 7 to 13 show a second embodiment according to claim 1. The same reference numbers as in the first embodiment have been used in these drawings to designate similar elements. This second embodiment has the particularity that the lid 6, together with the anchoring parts 18, can be coupled both to the upper end 8 of the spacers 7 and to the upper portion 10B of the side rails 2B which constitute the side walls 33. To that end, as can be seen in Figures 11 to 13, the upper end 8 of the spacers 7 reproduces the section shape of the upper portion 10B of the side walls 33. In other words, the outer wall of the upper portion 10B of the side walls 33 comprises an upper shoulder 29B and a cantilever wing 30B extending from said shoulder obliquely downwards and outwards and ending in a short segment extending inwards, forming a bend 12B. This configuration allows a first assembly like the one shown in Figure 12, in which the spacers 7 are fixed to the side walls 33, the lid 6 is coupled to said upper end 8 of the spacers 7, and the anchoring part 18 is press fit onto said upper end 8 of the spacers 7, applying pressure on said lid 6, and in a second assembly like the one shown in Figure 13, in which the spacers 7 are dispensed with and the lid 6 is therefore coupled directly to the upper portion 10B of the side walls 33, and the anchoring part 18 is press fit onto said upper portion 10B of the side walls 33, applying pressure on said lid 6. This configuration, in which the upper end 8 of the spacers 7 reproduces the section shape of the upper portion 10B of the side walls 33, also allows another assembly like the one shown in Figure 14, in which the spacers 7 are fitted one on top of the other by press fitting the lower end 9 of one spacer 7 onto the upper end 8 of the other spacer 7. The lid 6 is therefore coupled to the upper spacer 7. By fitting the spacers one on top of another in that manner, the height of separation between the side walls 33 and the lid 6 is readily increased.

When the side walls 33 have a large width, such as, for example, in the second embodiment shown in Figures 7 to 13, preferably the planar upper face 11B of the side walls 33 has a groove 16 extending along the side wall 33, such that the tooth 17 of the planar upper wing 15 of the spacers 7 fits in said groove 16.

It will be observed that there are differences in detail between the spacers 7 of the first embodiment (Figures 1 to 6) and the spacers 7 of the second embodiment (Figures 7 to 13). In particular, in the first embodiment the spacers 7 have a vertical reinforcement rib on their inner face and the end of the upper wing has a shoulder oriented downwards, whereas in the second embodiment the vertical reinforcement rib is on the outer face of the spacer 7, and the upper wing is thicker and does not have a shoulder at its end. These differences in detail are interchangeable between the two embodiments. Naturally, other differences in shape are possible without departing from the scope of the invention.

Like in the first embodiment, the side rails 2B and the cross members 3 are profiles made of a polymer material, and the lid 6, the spacers 7, and the anchoring parts 18 are made up of a single part made of made of a polymer material.

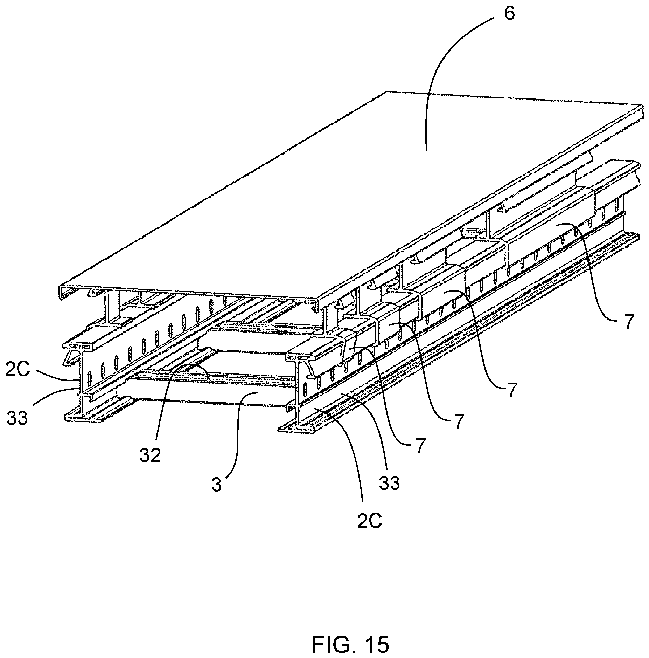

It is possible to use in one and the same cable tray different spacers 7 of a different length in the longitudinal direction of the side walls 33. Figure 15 depicts by way of example four spacers 7 of different lengths, although it is possible to combine as many spacers 7 of different lengths as may be appropriate. The spacers 7 of greater length allow protecting the cables in certain segments where greater protection is required, keeping the lid 6 separated. Naturally, the use of spacers 7 with different lengths is possible regardless of the particular shape of the side walls 33, which can be the shape of the side rails 2A, 2B, 2C, or another shape.

The side rail 2C depicted in Figure 15, forming the side wall 33, is identical to the side rail 2B except in that it has a smaller width and is lacking the groove 16. In this case, the tooth 17 of the lid 6 fits on the end edge of the planar upper face of the side wall 33, like in the first embodiment.

## Claims

1. A cable tray assembly (1), comprising:
- a cable tray (1) with a bottom wall (32) and two side walls (33) facing one another extending respectively from the two longitudinal sides of said bottom wall (32) and demarcating with respect to one another an open upper face (4) of said cable tray (1);
- a lid (6) which is arranged on said cable tray (1), covering said open upper face (4) of the cable tray (1) in at least one segment of said cable tray (1);
- spacers (7) which are fixed to each of said side walls (33) spaced apart from one another along each side wall (33), said spacers (7) being arranged between said lid (5) and said side walls (33) and thereby separating said lid (6) from said open upper face (4) of the cable tray (1);
wherein each of said spacers (7) is made up of a single part and comprises an upper end (8) to which said lid (6) is coupled and a lower end (9) having a complementary shape with respect to an upper portion (10A, 10B) of said side walls (33), said upper portion (10A, 10B) of the side walls (33) having a constant section along the side wall (33), such that said lower end (9) of the spacer (7) is press fit onto said upper portion (10A, 10B) of the side wall (33) in any position along said side wall (33);
**characterized in that** said upper end (8) of the spacers (7) reproduces the section shape of said upper portion (10B) of the side walls (33), such that said lid (6) can be coupled both to said upper end (8) of the spacers (7) and to said upper portion (10B) of the side walls (33), and such that two spacers (7) can be coupled one on top of the other by press fitting the lower end (9) of one spacer (7) onto the upper end (8) of the other spacer (7).

2. The cable tray assembly (1) according to claim 1, **characterized in that** said upper portion (10A, 10B) of the side walls (33) has a section shape comprising a planar upper face (11A, 11B) and an outer wall forming a bend (12A, 12B), and said lower end (9) of the spacers (7) has a section shape comprising a hook-shaped lower wing (13), a planar upper wing (14) facing said lower wing (13), and a joining segment (15) joining said lower wing (13) and said planar upper wing (14) to one another, with said lower end (9) of the spacers (7) being elastically deformable, such that it can undergo an elastic deformation which increases the separation between said planar upper wing (14) and said hook-shaped lower wing (13), thereby allowing a press fitting of said lower end (9) of the spacers (7) with said upper portion (10A, 10B) of the side walls (33), wherein said hook-shaped lower wing (13) fits with said bend (12A, 12B) and said planar upper wing (14) rests against said planar upper face (11A, 11B) of the upper portion (10A, 10B) and applies pressure on said upper portion (10A, 10B) due to the effect of said elastic deformation of the lower end (9).

3. The cable tray assembly (1) according to claim 2, **characterized in that** said planar upper face (11B) of the side walls (33) comprises a groove (16) extending along the side wall (33), and said planar upper wing (14) of the lower end (9) of the spacers (7) comprises at the end thereof a tooth (17) fitting in said groove (16).

4. The cable tray assembly (1) according to claim 2, **characterized in that** said planar upper wing (14) of the lower end (9) of the spacers (7) comprises at the end thereof a tooth (17) fitting on an end edge (19) of said planar upper face (11A) of the side walls (33).

5. The cable tray assembly (1) according to any one of claims 1 to 4, **characterized in that** it comprises at least one anchoring part (18), said anchoring part (18) being coupled to said spacers (7) to secure the coupling of said lid (6) to said spacers (7), and **in that** said anchoring part (18) is made up of a single part and has a complementary shape with respect to said upper end (8) of the spacers (7), such that said anchoring part (18) is press fit onto said upper end (8) of the spacers (7) and applies pressure on said lid (6).

6. The cable tray assembly (1) according to claim 6, **characterized in that** said anchoring part (18), said upper end (8) of the spacers (7), and said upper portion (10B) of the side walls (33) are formed such that said anchoring part (18) press fits both onto said upper end (8) of the spacers (7), applying pressure on said lid (6) coupled to said upper end (8) of the spacers (7), and onto said upper portion (10B) of the side walls (33), applying pressure on said lid (6) coupled to said upper portion (10B) of the side walls (33).

7. The cable tray assembly (1) according to any one of claims 6 or 7, **characterized in that** said anchoring part (18) is made up of a single part made of a polymer material.

8. The cable tray assembly (1) according to any one of claims 1 to 7, **characterized in that** at least one of said spacers (7) is longer than another one of said spacers (7) in the longitudinal direction of the side walls (33).

9. The cable tray assembly (1) according to any one of claims 1 to 8, **characterized in that** said cable tray (1) is a cable ladder formed by two coplanar side rails (2A, 2B, 2C) attached to one another by a plurality of cross members (3) spaced apart from one another, said two side rails (2A, 2B, 2C) constituting said side walls (33) of the cable tray (1), demarcating with respect to one another said open upper face (4), and said plurality of cross members (3) constituting a discontinuous bearing surface for cables which constitutes said bottom wall (32) of the cable tray (1); wherein each of said cross members (3) is a profile made of a polymer material and each of said side rails (2A, 2B, 2C) is a profile made of a polymer material; and wherein the inner side (5) of each of said side rails (2A, 2B, 2C), facing the opposite side rail (2A, 2B, 2C), and the two ends of each of said cross members (3) are formed such that said ends of cross member (3) are press fit onto said inner sides (5) of the side rails (2A, 2B, 2C); and wherein said lid (6) is made up of a single part made of a polymer material.

10. The cable tray assembly (1) according to any one of claims 1 to 9, **characterized in that** each of said spacers (7) is made up of a single part made of a polymer material.

## Patentansprüche

1. Kabelbahnanordnung (1), umfassend:
- eine Kabelbahn (1) mit einer Bodenwand (32) und zwei Seitenwänden (33), die einander gegenüberliegend sich jeweils von den beiden Längsseiten der Bodenwand (32) erstrecken und zueinander eine offene Oberseite (4) der Kabelbahn (1) abgrenzen;
- einen auf der Kabelbahn (1) angeordneten Deckel (6), der die offene Oberseite (4) der Kabelbahn (1) zumindest in einem Segment der Kabelbahn (1) abdeckt;
- Abstandhalter (7), die jeweils an den Seitenwänden (33) voneinander beabstandet entlang jeder Seitenwand (33) angebracht sind, wobei die Abstandhalter (7) zwischen dem Deckel (5) und den Seitenwänden (33) angeordnet sind und dadurch den Deckel (6) von der offenen Oberseite (4) der Kabelbahn (1) trennen;
wobei jeder der Abstandhalter (7) einstückig ausgebildet ist und ein oberes Ende (8), an dem der Deckel (6) angekoppelt ist, und ein unteres Ende (9) mit einer zu einem oberen Abschnitt (10A, 10B) der Seitenwände (33) komplementären Form umfasst, wobei der obere Abschnitt (10A, 10B) der Seitenwände (33) entlang der Seitenwand (33) einen konstanten Querschnitt aufweist, so dass das untere Ende (9) des Abstandhalters (7) in jeder Position entlang der Seitenwand (33) in Presspassung auf dem oberen Abschnitt (10A, 10B) der Seitenwand (33) liegt;
**dadurch gekennzeichnet, dass**
das obere Ende (8) der Abstandhalter (7) die Querschnittsform des oberen Abschnitts (10B) der Seitenwände (33) nachbildet, so dass der Deckel (6) sowohl mit dem oberen Ende (8) der Abstandhalter (7) wie mit dem oberen Abschnitt (10B) der Seitenwände (33) koppelbar ist, und so dass zwei Abstandhalter (7) übereinander durch Presspassung des unteren Endes (9) des einen Abstandhalters (7) auf das obere Ende (8) des anderen Abstandhalters (7) koppelbar sind.

2. Kabelbahnanordnung (1) nach Anspruch 1, **dadurch gekennzeichnet, dass** der obere Abschnitt (10A, 10B) der Seitenwände (33) eine Querschnittsform aufweist, die eine planare Oberseite (11A, 11B) und eine Außenwand, die eine Biegung (12A, 12B) bildet, umfasst, und wobei das untere Ende (9) der Abstandhalter (7) eine Querschnittsform aufweist, die einen hakenförmigen unteren Flügel (13), einen dem unteren Flügel (13) zugewandten planaren oberen Flügel (14) sowie ein Verbindungssegment (15), das den unteren Flügel (13) und den planaren oberen Flügel (14) miteinander verbindet, umfasst, wobei das untere Ende (9) der Abstandhalter (7) elastisch verformbar ausgebildet ist, so dass es eine elastische Verformung erfahren kann, die die Trennung zwischen dem planaren oberen Flügel (14) und dem hakenförmigen unteren Flügel (13) vergrößert, wodurch eine Presspassung des unteren Endes (9) der Abstandhalter (7) mit dem oberen Abschnitt (10A, 10B) der Seitenwände (33) möglich ist, wobei der hakenförmige untere Flügel (13) passend zu der Biegung (12A, 12B) ausgebildet ist und der planare obere Flügel (14) gegen die planare Oberseite (11A, 11B) des oberen Abschnitts (10A, 10B) anliegt und durch die Wirkung der elastischen Verformung des unteren Endes (9) auf den oberen Abschnitt (10A, 10B) Druck ausübt.

3. Kabelbahnanordnung (1) nach Anspruch 2, **dadurch gekennzeichnet, dass** die planare Oberseite (11B) der Seitenwände (33) eine Nut (16) umfasst, die sich entlang der Seitenwand (33) erstreckt, und der planare obere Flügel (14) des unteren Endes (9) der Abstandhalter (7) an seinem Ende einen Zahn (17) umfasst, der in die Nut (16) passt.

4. Kabelbahnanordnung (1) nach Anspruch 2, **dadurch gekennzeichnet, dass** der planare obere Flügel (14) des unteren Endes (9) der Abstandhalter (7) an seinem Ende einen Zahn (17) umfasst, der auf eine Endkante (19) der planaren Oberseite (11A) der Seitenwände (33) passt.

5. Kabelbahnanordnung (1) nach einem der Ansprüche 1 bis 4, **dadurch gekennzeichnet, dass** sie mindestens einen Verankerungsteil (18) umfasst, wobei der Verankerungsteil (18) mit den Abstandhaltern (7) gekoppelt ist, um die Kopplung des Deckels (6) an die Abstandhalter (7) zu sichern, und dass der Verankerungsteil (18) einstückig ausgebildet ist und eine zum oberen Ende (8) der Abstandhalter (7) komplementäre Form aufweist, so dass der Verankerungsteil (18) in Presspassung auf dem oberen Ende (8) der Abstandhalter (7) liegt und auf den Deckel (6) Druck ausübt.

6. Kabelbahnanordnung (1) nach Anspruch 6, **dadurch gekennzeichnet, dass** der Verankerungsteil (18), das obere Ende (8) der Abstandhalter (7) und der obere Abschnitt (10B) der Seitenwände (33) derart ausgebildet sind, dass der Verankerungsteil (18) in Presspassung sowohl auf dem oberen Ende (8) der Abstandhalter (7) liegt, dabei auf den mit dem oberen Ende (8) der Abstandhalter (7) gekoppelten Deckel (6) Druck ausübt, wie auf dem oberen Abschnitt (10B) der Seitenwände (33) liegt, dabei auf den mit dem oberen Abschnitt (10B) der Seitenwände (33) gekoppelten Deckel (6) Druck ausübt.

7. Kabelbahnanordnung (1) nach einem der Ansprüche 6 oder 7, **dadurch gekennzeichnet, dass** der Verankerungsteil (18) einstückig aus einem Polymermaterial gebildet ist.

8. Kabelbahnanordnung (1) nach einem der Ansprüche 1 bis 7, **dadurch gekennzeichnet, dass** mindestens einer der Abstandhalter (7) länger ist als ein anderer der Abstandhalter (7) in der Längsrichtung der Seitenwände (33).

9. Kabelbahnanordnung (1) nach einem der Ansprüche 1 bis 8, **dadurch gekennzeichnet, dass** die Kabelbahn (1) als Kabelleiter ausgebildet ist, die durch zwei koplanare Seitenschienen (2A, 2B, 2C), die durch eine Mehrzahl an voneinander beabstandeten Querstücken (3) miteinander verbunden sind, gebildet ist, wobei die zwei Seitenschienen (2A, 2B, 2C), die die Seitenwände (33) der Kabelbahn (1) bilden, in Bezug zueinander die offene Oberseite (4) abgrenzen, und wobei die Mehrzahl an Querstücken (3) eine diskontinuierliche Lagerfläche für Kabel bildet, die die Bodenwand (32) der Kabelbahn (1) bildet; wobei jedes der Querstücke (3) als Profil aus einem Polymermaterial gebildet ist und jede der Seitenschienen (2A, 2B, 2C) als Profil aus einem Polymermaterial gebildet ist; und wobei die Innenseite (5) der Seitenschienen (2A, 2B, 2C) jeweils der gegenüberliegenden Seitenschiene (2A, 2B, 2C) zugewandt ist und die beiden Enden jedes der Querstücke (3) derart ausgebildet sind, dass die Enden des Querstücks (3) in Presspassung auf den Innenseiten (5) der Seitenschienen (2A, 2B, 2C) liegen; und wobei der Deckel (6) einstückig aus einem Polymermaterial gebildet ist.

10. Kabelbahnanordnung (1) nach einem der Ansprüche 1 bis 9, **dadurch gekennzeichnet, dass** jeder der Abstandhalter (7) einstückig aus einem Polymermaterial gebildet ist.

## Revendications

1. Ensemble de chemin de câbles (1), comprenant :
- un chemin de câbles (1) ayant une paroi inférieure (32) et deux parois latérales (33) se faisant face et s'étendant respectivement depuis les deux côtés longitudinaux de ladite paroi inférieure (32) et délimitant l'une par rapport à l'autre une face supérieure ouverte (4) dudit chemin de câbles (1) ;
- un couvercle (6) qui est agencé sur ledit chemin de câbles (1), recouvrant ladite face supérieure ouverte (4) du chemin de câbles (1) dans au moins un segment dudit chemin de câbles (1) ;
- des éléments d'espacement (7) qui sont fixés à chacune desdites parois latérales (33) et espacés les uns des autres le long de chaque paroi latérale (33), lesdits éléments d'espacement (7) étant agencés entre ledit couvercle (5) et lesdites parois latérales (33) et séparant ainsi ledit couvercle (6) de ladite face supérieure ouverte (4) du chemin de câbles (1) ;
dans lequel chacun desdits éléments d'espacement (7) est constitué d'une pièce unique et comprend une extrémité supérieure (8) à laquelle ledit couvercle (6) est couplé et une extrémité inférieure (9) ayant une forme complémentaire par rapport à une partie supérieure (10A, 10B) desdites parois latérales (33), ladite partie supérieure (10A, 10B) des parois latérales (33) ayant une section constante le long de la paroi latérale (33), de telle sorte que ladite extrémité inférieure (9) de l'élément d'espacement (7) s'emboîte à pression sur ladite partie supérieure (10A, 10B) de la paroi latérale (33) dans toute position le long de ladite paroi latérale (33) ;
**caractérisé en ce que** ladite extrémité supérieure (8) des éléments d'espacement (7) reproduit la forme de section de ladite partie supérieure (10B) des parois latérales (33), de telle sorte que ledit couvercle (6) peut être couplé à la fois à ladite extrémité supérieure (8) des éléments d'espacement (7) et à ladite partie supérieure (10B) des parois latérales (33), et de telle sorte que deux éléments d'espacement (7) peuvent être couplés l'un au-dessus de l'autre par emboîtement à pression de l'extrémité inférieure (9) d'un élément d'espacement (7) sur l'extrémité supérieure (8) de l'autre élément d'espacement (7).

2. Ensemble de chemin de câbles (1) selon la revendication 1, **caractérisé en ce que** ladite partie supérieure (10A, 10B) des parois latérales (33) a une forme de section comprenant une face supérieure plane (11A, 11B) et une paroi extérieure formant un coude (12A, 12B), et ladite extrémité inférieure (9) des éléments d'espacement (7) a une forme de section comprenant une aile inférieure en forme de crochet (13), une aile supérieure plane (14) faisant face à ladite aile inférieure (13), et un segment de jonction (15) joignant ladite aile inférieure (13) et ladite aile supérieure plane (14) l'une à l'autre, ladite extrémité inférieure (9) des éléments d'espacement (7) étant déformable par élasticité, de sorte qu'elle peut subir une déformation élastique qui augmente la séparation entre ladite aile supérieure plane (14) et ladite aile inférieure en forme de crochet (13), en permettant ainsi un emboîtement à pression de ladite extrémité inférieure (9) des éléments d'espacement (7) avec ladite partie supérieure (10A, 10B) des parois latérales (33), ladite aile inférieure en forme de crochet (13) s'emboîtant avec ledit coude (12A, 12B) et ladite aile supérieure plane (14) reposant contre ladite face supérieure plane (11A, 11B) de la partie supérieure (10A, 10B) et appliquant une pression sur ladite partie supérieure (10A, 10B) en raison de l'effet de ladite déformation élastique de l'extrémité inférieure (9).

3. Ensemble de chemin de câbles (1) selon la revendication 2, **caractérisé en ce que** ladite face supérieure plane (11B) des parois latérales (33) comprend une rainure (16) s'étendant le long de la paroi latérale (33), et ladite aile supérieure plane (14) de l'extrémité inférieure (9) des éléments d'espacement (7) comprend à son extrémité une dent (17) s'ajustant dans ladite rainure (16).

4. Ensemble de chemin de câbles (1) selon la revendication 2, **caractérisé en ce que** ladite aile supérieure plane (14) de l'extrémité inférieure (9) des éléments d'espacement (7) comprend à son extrémité une dent (17) s'emboîtant sur un bord d'extrémité (19) de ladite face supérieure plane (11A) des parois latérales (33).

5. Ensemble de chemin de câbles (1) selon l'une quelconque des revendications 1 à 4, **caractérisé en ce qu'**il comprend au moins une pièce d'ancrage (18), ladite pièce d'ancrage (18) étant couplée auxdits éléments d'espacement (7) pour fixer le couplage dudit couvercle (6) auxdits éléments d'espacement (7), et **en ce que** ladite pièce d'ancrage (18) est constituée d'une seule pièce et a une forme complémentaire par rapport à ladite extrémité supérieure (8) des éléments d'espacement (7), de sorte que ladite pièce d'ancrage (18) s'emboîte à pression sur ladite extrémité supérieure (8) des éléments d'espacement (7) et applique une pression sur ledit couvercle (6).

6. Ensemble de chemin de câbles (1) selon la revendication 6, **caractérisé en ce que** ladite pièce d'ancrage (18), ladite extrémité supérieure (8) des éléments d'espacement (7) et ladite partie supérieure (10B) des parois latérales (33) sont formés de telle sorte que ladite pièce d'ancrage (18) s'emboîte à pression à la fois sur ladite extrémité supérieure (8) des éléments d'espacement (7), en appliquant une pression sur ledit couvercle (6) couplé à ladite extrémité supérieure (8) des éléments d'espacement (7), et sur ladite partie supérieure (10B) des parois latérales (33), en appliquant une pression sur ledit couvercle (6) couplé à ladite partie supérieure (10B) des parois latérales (33).

7. Ensemble de chemin de câbles (1) selon l'une quelconque des revendications 6 ou 7, **caractérisé en ce que** ladite pièce d'ancrage (18) est constituée d'une pièce unique faite d'un matériau polymère.

8. Ensemble de chemin de câbles (1) selon l'une quelconque des revendications 1 à 7, **caractérisé en ce qu'**au moins l'un desdits éléments d'espacement (7) est plus long qu'un autre desdits éléments d'espacement (7) dans la direction longitudinale des parois latérales (33).

9. Ensemble de chemin de câbles (1) selon l'une quelconque des revendications 1 à 8, **caractérisé en ce que** ledit chemin de câbles (1) est une échelle de câbles formée par deux rails latéraux coplanaires (2A, 2B, 2C) fixés l'un à l'autre par une pluralité de traverses (3) espacées les unes des autres, lesdits deux rails latéraux (2A, 2B, 2C) constituant lesdites parois latérales (33) du chemin de câbles (1), délimitant l'une par rapport à l'autre ladite face supérieure ouverte (4), et ladite pluralité de traverses (3) constituant une surface d'appui discontinue de câbles qui constitue ladite paroi inférieure (32) du chemin de câbles (1) ; dans lequel chacune desdites traverses (3) est un profilé réalisé en un matériau polymère et chacun desdits rails latéraux (2A, 2B, 2C) est un profilé réalisé dans un matériau polymère ; et dans lequel le côté intérieur (5) de chacun desdits rails latéraux (2A, 2B, 2C), faisant face au rail latéral opposé (2A, 2B, 2C), et les deux extrémités de chacune desdits traverses (3) sont formés de telle sorte que lesdites extrémités de traverse (3) s'emboîtent à pression sur lesdits côtés intérieurs (5) des rails latéraux (2A, 2B, 2C) ; et dans lequel ledit couvercle (6) est constitué d'une pièce unique réalisée dans un matériau polymère.

10. Ensemble de chemin de câbles (1) selon l'une quelconque des revendications 1 à 9, **caractérisé en ce que** chacun desdits éléments d'espacement (7) est constitué d'une pièce unique réalisée dans un matériau polymère.
